# EUROPÄISCHE PATENTSCHRIFT

(11) **EP 1 249 007 B1**
(45) Veröffentlichungstag und Bekanntmachung des Hinweises auf die Patenterteilung: **10.09.2003**
(21) Anmeldenummer: 00979651.7
(22) Anmeldetag: 30.11.2000
(51) Int. Cl.: G07C 9/00, G07C 9/02

(54) **BERECHTIGUNGSKONTROLLEINRICHTUNG**
AUTHORIZATION CONTROL DEVICE
DISPOSITIF DE CONTROLE D'AUTORISATION

(30) Priorität: 19.01.2000 DE 10001929
(43) Veröffentlichungstag der Anmeldung: 16.10.2002
(73) Patentinhaber: SkiData AG, 5083 Gartenau (AT)
(72) Erfinder: STOCKHAMMER, Rudolf, A-5340 Gilgen (AT)
(74) Vertreter: Haft, von Puttkamer, Berngruber, Czybulka
(86) Internationale Anmeldenummer: EP0012049
(87) Internationale Veröffentlichungsnummer: WO01054074

(56) Entgegenhaltungen:
- WO-A-98/12670
- DE-A- 19 822 206
- GB-A- 2 156 127
- GB-A- 2 181 582

## Beschreibung

Die Erfindung bezieht sich auf eine Einrichtung zur Kontrolle der Berechtigung einer Person bei Inanspruchnahme einer Leistung mit einem Datenträger, der mit einem Lesegerät kommuniziert, nach dem Oberbegriff des Anspruchs 1.

Um eine mißbräuchliche Verwendung zu verhindern, werden Datenträger, insbesondere Chipkarten, heutzutage mit einer PIN-Nummer kombiniert. Da sich der Anwender unterschiedliche Nummern für verschiedene Chipkarten merken muß, besteht die Gefahr, dass er sie verwechselt oder vergißt. Damit erhöht sich die Fehlerhäufigkeit bei Chipkartenverwendung, was z. B. zur Folge hat, dass die Warteschlangen, die sich während der Stoßzeiten ohnehin schon durch die PIN-Eingabe ergeben, noch länger werden.

Aus DE 19648767 A1 ist bereits eine Einrichtung nach dem Oberbegriff des Anspruchs 1 bekannt, bei der der Datenträger durch eine Chipkarte gebildet wird, in der der Fingerabdruck der berechtigten Person gespeichert wird und die mit einem Sensor versehen ist, der den Fingerabdruck des Anwenders erfaßt. Ergibt der Vergleich bei Einbringen der Chipkarte in das Lesegerät Übereinstimmung, wird die eigentliche Chipkartenfunktion, beispielsweise der Zutritt, freigegeben.

Auch ist es beispielsweise aus WO 88/04153 und EP 0691822 B1 bekannt, Personen anhand des Musters ihrer subkutanen Blutgefäße zu identifizieren. Dazu wird die Hand der betreffenden Person durch Ergreifen eines Griffs oder dergleichen positioniert und dann das Infrarotemissionsspektrum des Handrückens gemessen.

Die GB 2 156 127 A zeigt ein Gerät zur Abtastung menschlicher Hautpartien zur Analyse subkutaner Blutgefässe als biometrische Identifikationsmerkmale. Durch den Vergleich gespeicherter Referenz- muster mit den aufgenommenen biometrischen Mustern kann die zu prüfende Person identifiziert bzw. authentifiziert werden; das Ergebnis kann an eine externe Einheit übermittelt werden.

Gegenüber Chipkarten urd dergleichen Datenträger, die in ein Lesegerät gesteckt werden müssen, besitzen berührungslos arbeitende Datenträger, die über eine größere Datenübertragungsentfernung mit dem Lesegerät im Rundfunkwellenbereich zusammenarbeiten, den Vorteil, dass sie beispielsweise in Form einer Karte an der Kleidung befestigt oder in eine Armbanduhr integriert werden können, also "handfree" einsetzbar sind.

Demgemäß werden berührungslos arbeitende Datenträger beispielsweise bevorzugt an Zugangskontrolleinrichtungen von Skiliften und Seilbahnanlagen eingesetzt, die im allgemeinen eine Personenvereinzelungseinrichtung, wie ein Drehkreuz, aufweisen, welche durch das Lesegerät betätigt, d. h. für eine Person entsperrt wird, wenn das Lesegerät vom Datenträger entsprechende Daten empfängt. Da ein PIN-Code im Skibetrieb ebenso ausscheidet wie ein Fingerabdrucksensor, schon wegen der Handschuhe, die der Skifahrer trägt, wird heutzutage, um eine Weitergabe an andere Personen zu verhindern, der nicht übertragbare Datenträger meist mit einem Foto kombiniert, das an der Kleidung des Skifahrers befestigt ist. Ein solches Foto ist jedoch mit einem erheblichen Aufwand verbunden.

Aufgabe der Erfindung ist es daher, einen berührungslos arbeitenden Datenträger mit nicht übertragbarer, personenbezogener Berechtigung zur Leistungsinanspruchnahme, beispielsweise für die Personenbeförderungsanlagen eines Skigebietes, bereitzustellen, mit dem eine mißbräuchliche Weitergabe an andere Personen verhindert ist.

Aspchte der Erfindung werden in unabhängigen Anspruch 1 offenbart.

Dies wird erfindungsgemäß dadurch erreicht, dass der berührungslos arbeitende Datenträger durch einen auf der Haut getragenen Gegenstand gebildet wird, der mit einem Sensor versehen ist, der biometrische Identifikationsmerkmale der Haut erfaßt.

Der auf der Haut getragene Gegenstand kann ein Kleidungsstück, beispielsweise ein Handschuh oder ein Stirnband sein. Besonders bevorzugt sind jedoch Gegenstände, die unabhängig von der Umgebungstemperatur getragen werden, beispielsweise ein Armband, eine Armbanduhr oder ein Fingerring.

Die vom Sensor erfaßten biometrischen Hautidentifikationsmerkmale können unterschiedlicher Art sein. So kann beispielsweise das Hautfurchenrelief erfaßt werden, dessen Messung z. B. in DE 2719341 C3 oder DE 3433194 A1 beschrieben ist.

Bevorzugt wird jedoch ein Infrarotsensor verwendet, der unter dem Gegenstand angeordnet ist und dadurch auf der Haut aufliegt, so dass er das subkutane Muster von Arterien, Venen, Kapillaren und anderen Blutgefäßen darunter sicher erfaßt.

Da die Hand ein besonderes individuelles, intensives subkutanes Blutgefäßmuster aufweist, wird der erfindungsgemäße Gegenstand mit dem Sensor bevorzugt in diesem Bereich getragen. Demgemäß werden erfindungsgemäß als Datenträger ein Armband, eine Armbanduhr, ein Fingerring oder ein Handschuh verwendet, um einerseits berührungslos mit dem Lesegerät zu kommunizieren und zugleich mit dem Sensor die biometrischen Hautidentifikationsmerkmale im Bereich der Hand erfassen zu können, also die biometrischen Hautidentifikationsmerkmale am Handrükken (Handschuh), an einem Finger (Fingerring) bzw. am Handgelenk (Armband oder Armbanduhr). Gegenüber anderen Gegenständen, die auf der Haut getragen werden, beispielsweise einem Stirnband, besitzen die erwähnten an der Hand getragenen Gegenstände den zusätzlichen Vorteil, dass sie, da sie mehr oder weniger immer an der gleichen Stelle getragen werden, zu einer entsprechenden Positionierung des Sensors in dem Handbereich führen, dessen biometrische Hautidentifikationsdaten gespeichert worden sind.

Die Daten der zu identifizierenden biometrischen Merkmale können in einem Chip in der Armbanduhr oder dem sonstigen auf der Haut getragenen Datenträger eingelesen und gespeichert sein, der zugleich das Mittel zum Vergleich der gespeicherten und der erfaßten biometrischen Identifikationsmermale bildet. Ergibt der Vergleich der in den Chip eingelesenen und gespeicherten biometrischen Daten mit den vom Sensor gemessenen Hautidentifikationsmerkmalen Übereinstimmung, erfolgt mit dem Transponder zur berührungslosen Datenübertragung in dem auf der Haut getragenen Gegenstand eine Datentransaktion mit dem Lesegerät unter Freischaltung der Zugangskontrolleinrichtung.

Ferner ist es möglich, die zu identifizierenden biometrischen Daten der zutrittsberechtigten Personen der betreffenden Zutrittskontrolleinrichtung im Lesegerät bzw. in einer Zentraleinheit, mit der das Lesegerät on- oder off-line verbunden ist, zu speichern. Schließlich können die zu identifizierenden biometrischen Daten sowohl in einem Chip in dem betreffenden auf der Haut getragenen Datenträger wie im Lesegerät bzw. der Zentraleinheit gespeichert sein, wenn besonders hohen Sicherheitsanforderungen entsprochen werden muß.

Um ein unauthorisiertes Auslesen und Verändern der Daten zu verhindern, können die biometrischen Daten in einem nicht frei zugreifbaren, kryptologisch geschützten Speicherbereich gespeichert sein.

Das Lesegerät ist zur Ausstrahlung elektromagnetischer Wellen, insbesondere im Rundfunkwellenbereich ausgebildet. Es weist dazu Spulen und Kondensatoren, Schwingkreise, Optokoppler und dgl. auf. Der Datenträger, der vorzugsweise als Transponder ausgebildet ist, weist ebenso Einrichtungen wie Spulen, Kondensatoren, Schwingkreise, Optokoppler zur nichtgalvanischen Energie- und/oder Datenübertragung auf, so dass zwischen dem Datenträger und dem Lesegerät Energie und/oder Daten übertragen werden.

Der Sensor wird durch den Transponder vorzugsweise nur dann in Betrieb gesetzt, wenn sich der Datenträger im Transaktionsabstand zum Lesegerät befindet.

Die erfindungsgemäße Einrichtung ist beispielsweise in touristischen Gebieten einsetzbar, um Berechtigungen für den Zugang zu Skiliften, Seilbahnanlagen und anderen touristischen Einrichtungen, wie Hallenbäder, Parkgaragen sowie Werte für den bargeldlosen Zahlungsverkehr in Restaurants, Sportgeschäften usw. einzutragen.

Die erfindungsgemäße Einrichtung ist aber selbstverständlich nicht auf den Touristikbetrieb beschränkt. Vielmehr kann ein solcher berührungslos arbeitender Datenträger für die verschiedensten Anwendungen eingesetzt werden, beispielsweise bei der Benutzung öffentlicher Transportsysteme, als elektronische Geldbörse und dgl., also insbesondere als Multifunktionsdatenträger, der für möglichst viele Anwendungen einsetzbar ist, ggf. sogar als einziger persönlicher Datenträger, mit dem für die betreffende Person praktisch alle Leistungen in Anspruch genommen werden können, die mit einem Lesegerät kontrolliert werden.

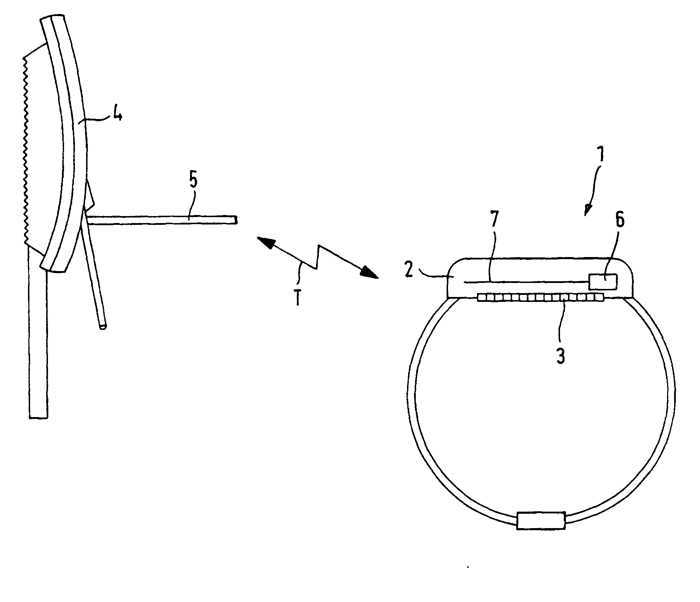

Nachstehend ist die Erfindung anhand der beigefügten Zeichnung beispielhaft näher erläutert, deren einzige Figur schematisch ein System zur Personenberechtigungskontrolle zeigt.

Danach weist die teilweise geschnitten dargestellte Armbanduhr 1 am Uhrgehäuse 2 an der dem nicht dargestellten Handgelenk zugewandten Unterseite einen Infrarotsensor 3 auf, der das Muster der subkutanen Blutgefäße des Handgelenks der betreffenden Person erfaßt.

Die den Datenträger bildende Armbanduhr 1 weist zur Datentransaktion gemäß dem Pfeil T mit dem Lesegerät 4 an der Zugangskontrolleinrichtung 5, die als Drehkreuz ausgebildet ist, zudem einen Transponder mit einem Chip 6 und einer Antennenspule 7 auf.

Die vom Sensor 3 gemessenen subkutanen Blutgefäßmusterdaten der betreffenden Person werden dem Chip 6 zugeführt und mit der Antenne 7 berührungslos dem Lesegerät 4 übermittelt, das on- oder off-line mit einer Zentraleinheit verbunden ist, in der die biometrischen Hautidentifikationsdaten der zugangsberechtigten Personen abgelegt sind. Ergibt der Vergleich eine Übereinstimmung, dann wird die Zugangskontrolleinrichtung 5 freigegeben.

## Patentansprüche

1. Einrichtung zur Kontrolle der Berechtigung einer Person bei Inanspruchnahme einer Leistung mit einem Datenträger, der mit einem Lesegerät (4) berührungslos kommuniziert, sowie mit einem Sensor (3) zur Erfassung biometrischer Identifikationsmerkmale der Person, einem Speicher für die biometrischen Identifikationsmerkmale der berechtigten Person und Mitteln zum Vergleich der gespeicherten 8. und der erfaßten biometrischen Identifkationsmerkmale, wobei der Sensor (3) an der der Haut zugewandten Seite angeordnet und zur Erfassung der subkutanen Blutgefäße der darunter liegenden Haut als biometrische Identifikationsmerkmale ausgebildet ist, **dadurch gekennzeichnet, dass** der Datenträger als Armbanduhr (1) ausgebildet ist.

2. Einrichtung nach Anspruch 1, **dadurch gekennzeichnet, dass** der Speicher für die biometrischen Identifikationsmerkmale in dem Datenträger (1) vorgesehen ist.

3. Einrichtung nach Anspruch 1 oder 2, **dadurch gekennzeichnet, dass** das Lesegerät (4) mit dem Speicher für die biometrischen Identifikationsmerkmale verbunden ist.

## Claims

1. A device for controlling a person's authorization upon utilization of a service with a data carrier that communicates contactlessly with a reader (4), and with a sensor (3) for detecting the person's biometric identification features, a memory for the authorized person's biometric identification features and means for comparing the stored biometric identification features with those detected, the sensor (3) being disposed on the side facing the skin and formed for detecting the subcutaneous blood vessels of the skin located thereunder as biometric identification features, **characterized in that** the data carrier is formed as a wristwatch (1).

2. A device according to claim 1, **characterized in that** the memory for the biometric identification features is provided in the data carrier (1).

3. A device according to claim 1 or 2, **characterized in that** the reader (4) is connected with the memory for the biometric identification features.

## Revendications

1. Dispositif de contrôle de l'autorisation d'une personne lorsqu'elle bénéficie d'une prestation, comportant un support de données qui communique sans contact avec un lecteur (4), et un capteur (3) pour détecter des caractéristiques d'identification biométriques de la personne, une mémoire pour les caractéristiques d'identification biométriques de la personne, et des moyens pour comparer les caractéristiques d'identification biométriques mémorisées aux caractéristiques d'identification biométriques détectées, le capteur (3) étant agencé sur la face tournée vers la peau et réalisé pour détecter les vaisseaux sanguins sous-cutanés de la peau située en dessous et servant de caractéristiques d'identification biométriques, **caractérisé en ce que** le support de données est réalisé sous forme de montre-bracelet (1).

2. Dispositif selon la revendication 1, **caractérisé en ce que** la mémoire pour les caractéristiques d'identification biométriques est prévue dans le support de données (1).

3. Dispositif selon la revendication 1 ou 2, **caractérisé en ce que** le lecteur (4) est relié à la mémoire pour les caractéristiques d'identification biométriques.
